# EUROPÄISCHE PATENTSCHRIFT

(11) **EP 3 670 367 B1**
(45) Veröffentlichungstag und Bekanntmachung des Hinweises auf die Patenterteilung: **11.08.2021**
(21) Anmeldenummer: 19215105.8
(22) Anmeldetag: 11.12.2019
(51) Int. Cl.: B65G 21/20, B65B 25/06, B65G 47/74, B65G 47/90

(54) **VERPACKUNGSANLAGE MIT UNTERGREIFER**
PACKAGING SYSTEM WITH LOWER GRIPPER
INSTALLATION D'EMBALLAGE POURVU DE PINCE DE PRÉHENSION

(30) Priorität: 20.12.2018 DE 102018222397
(43) Veröffentlichungstag der Anmeldung: 24.06.2020
(73) Patentinhaber: MULTIVAC Sepp Haggenmüller SE & Co. KG, 87787 Wolfertschwenden (DE)
(72) Erfinder: WINTERGERST, Bernd, 87749 Hawangen (DE)
(74) Vertreter: Grünecker Patent- und Rechtsanwälte PartG mbB

(56) Entgegenhaltungen:
- EP-A2- 3 241 761
- WO-A2-99/00306
- GB-A- 2 174 064

## Beschreibung

Die vorliegende Erfindung betrifft eine Verpackungsanlage mit Untergreifer sowie ein Verfahren zum Betrieb derselben.
Lebensmittelprodukte, beispielsweise Scheiben von Fleisch, Fisch oder Käse, werden häufig auf dünnen Produktauflagen, insbesondere auf dünnem Trennpapier, platziert und anschließend in eine weitere Umverpackung, beispielsweise in eine stabile Verpackungsschale oder auf einen Karton gelegt oder auch gestapelt, insbesondere auch geschindelt, also teilweise überlappend gestapelt. Die geschindelten Scheiben können dann vom Verbraucher mittels des Trennpapiers wieder gut einzeln entnommen werden. Um den manuellen Arbeitsaufwand beim Verpacken zu verringern, muss eine Verpackungsanlage dazu fähig sein, die dünnen Produktauflagen mit den darauf befindlichen Produkten zu transportieren und in eine stabile Umverpackung oder auf einen stabilen Träger ein- bzw. aufzulegen. Die Herausforderung besteht dabei darin, die dünne Produktauflage anzuheben und zu bewegen. Strömungstechnische Verfahren, wie beispielsweise das Trennpapier anzusaugen oder das Trennpapier mittels eines Luftstroms anzuheben, scheiden dazu aus, da entweder Partikel des Produkts angesaugt werden oder das Produkt mit Fremdpartikeln verunreinigt werden würde.
Aus der WO 99/00306 ist eine Verpackungsmaschine mit einem Greifer bekannt, welcher Lebensmittelprodukte von einem Förderband greift und in eine Verpackung einlegt.
Aufgabe der vorliegenden Erfindung ist es, eine Verpackungsanlage bereitzustellen, welche eine verbesserte Handhabung von dünnen Produktauflagen ermöglicht.
Die Aufgabe wird erfindungsgemäß gelöst durch eine Verpackungsanlage gemäß Anspruch 1 sowie ein Verfahren zum Betrieb einer Verpackungsanlage gemäß Anspruch 13. Vorteilhafte Weiterbildungen der Erfindung sind in den Unteransprüchen angegeben.

Eine erfindungsgemäße Verpackungsanlage umfasst einen Zuförderer, einen Greifbereich und einen Untergreifer, wobei der Zuförderer eine Transportfläche aufweist und dazu geeignet ist, eine Produktauflage auf der Transportfläche in den Greifbereich zu transportieren. Der Untergreifer ist dazu konfiguriert, die Produktauflage in dem Greifbereich zu untergreifen, d.h. sich unter die Produktauflage zu schieben, um diese dann anheben zu können. Die Verpackungsanlage weist in dem Greifbereich einen Auflagestreifen für die Produktauflage mit einer inneren Kante und einer Oberseite auf, wobei die Oberseite im Vergleich zu der Transportfläche des Zuförderers erhöht ist. Während der größte Teil der Produktauflage auf der Transportfläche des Zuförderers aufliegt, liegt ein Randbereich der Produktauflage auf der inneren Kante des Auflagestreifens auf. Die innere Kante ist dabei die Berührungskante der im Wesentlichen horizontalen Oberseite und einer senkrechten oder schrägen Innenseite, wobei der Auflagestreifen auch ein flaches Blech mit sehr geringer vertikaler Dicke sein kann.

Durch den Höhenunterschied der Oberseite des Auflagestreifens, und damit der inneren Kante, zur Transportfläche des Zuförderers wird der Randbereich der Produktauflage nach oben gebogen. Dabei erzeugt das auf der Produktauflage befindliche Produkt die Gewichtskraft, um die Produktauflage in ihrem mittleren Bereich auf der Transportfläche zu halten. Zusammen mit der Biegesteifigkeit der Produktauflage wird so der Randbereich derselben um ca. 1 bis 10 mm nach oben gebogen. Durch das nach oben Stehen der Produktauflage in ihrem Randbereich kann der Untergreifer die Produktauflage nun zuverlässig untergreifen, d.h. zwischen der Produktauflage und der Oberseite des Auflagestreifens nach innen fahren und sich so unter die Produktauflage schieben. Ist dies weit genug geschehen, so dass die Produktauflage mit den darauf befindlichen Produkten ausreichend auf dem Untergreifer aufliegt, kann der Untergreifer die Produktauflage anheben und weg bewegen. So ist sichergestellt dass der Untergreifer zuverlässig die Produktauflage untergreifen kann, was andernfalls häufig nicht gelingt, wenn die Produktauflage, insbesondere in Form eines dünnen Trennpapiers, plan auf einer Fläche aufliegt. Vorzugsweise ist der Zuförderer ein Bandförderer, welcher insbesondere ein Gurtband umfasst. Damit ist eine stabile Transportfläche für die Produktauflage vorhanden, wobei für die Transportfläche des Bandförderers ein Material gewählt werden kann, welches leicht haftend ist, beispielsweise eine Gummi- oder Silikonbeschichtung, so dass der Zuförderer auch mit höheren Geschwindigkeiten betrieben werden kann. Ein Bandförderer mit einer durchgehend geschlossenen Transportfläche verhindert zudem, dass der Untergreifer sich in Maschen oder ähnlichen offenen Strukturen einfädelt.
In einer zweckmäßigen Variante ist der Auflagestreifen auf dem Gurtband des Zuförderers angeordnet und vorzugsweise fest oder einstückig mit dem Zuförderer verbunden. Der Auflagestreifen kann beispielsweise aus einem biegbaren Gummimaterial sein, welches als erhöhter Streifen auf das Gurtband des Zuförderers aufgeklebt, laminiert oder aufvulkanisiert wurde. Ebenso können Auflagestreifen und Gurtband einstückig aus Gummimaterial gegossen sein. Der Auflagestreifen kann durchgängig oder abschnittsweise auf dem Gurtband vorhanden sein und ist ausreichend flexibel um die Bewegung um die Umlenkrollen des Zuförderers mitzumachen. Diese Anordnung hat den Vorteil, dass kein Spalt zwischen Auflagestreifen und Gurtband existiert, in welchen die Produktauflage ungewollt einfädeln könnte.
In einer gängigen Variante ist der Auflagestreifen als vom Zuförderer separate Auflageschiene den Zuförderer teilweise überlappend angeordnet. Die Auflageschiene kann beispielsweise aus einem Metall geformt und an dem Zuförderer angeschraubt sein. So kann die Produktauflage vor dem Greifbereich und vor der Auflageschiene vollständig flach auf dem Zuförderer aufliegen und im Greifbereich in der gewünschten Breite auf der Auflageschiene bzw. deren inneren Kante aufliegen.

Üblicherweise ist der Auflagestreifen an einem seitlichen Rand des Zuförderers angeordnet. So wird der seitliche Randbereich der Produktauflage wie beschrieben angehoben und der Untergreifer kann ebenfalls seitlich des Zuförderers angeordnet sein und in einer zu einer Transportrichtung senkrechten oder schrägen Bewegung die Produktauflage untergreifen. Die Produktauflage kann so nicht gegen den Untergreifer gefahren bzw. gestoßen werden und die Transportbewegung muss nicht unterbrochen werden.

Bevorzugt ist der Auflagestreifen im Wesentlichen parallel zu einer Transportrichtung angeordnet. Je nach Länge des Auflagestreifens und Geschwindigkeit des Zuförderers kann so der Greifbereich festgelegt werden. Das Anheben des seitlichen Randbereichs der Produktauflage kann so während einer kontinuierlichen Transportbewegung erfolgen.

In einer vorteilhaften Variante ist der Auflagestreifen austauschbar an dem Zuförderer angeordnet. So können je nach Größe der Produktauflage Auflagestreifen unterschiedlicher Größe verwendet werden. Diese können unterschiedliche Längen und insbesondere Breiten haben, so dass Produktauflagen unterschiedlicher Größe stets mit einem ausreichend breiten Randbereich den Auflagestreifen überlappen bzw. der Randbereich von der inneren Kante der Auflageschiene nach oben gebogen wird. Außerdem besteht nicht die Gefahr, dass sich die Produktauflage unterhalb der Auflageschiene einfädelt.

Zweckmäßig ist die Auflageschiene verschiebbar an dem Zuförderer angeordnet. So kann alternativ oder zusätzlich zum Austausch der Auflageschiene eine Anpassung an die Größe der Produktauflage vorgenommen werden. Insbesondere kann durch Verschieben senkrecht zur Transportrichtung eine Anpassung an die Breite der Produktauflage erfolgen.

In einer weiteren Variante weist die Auflageschiene eine Anlaufschräge auf. Die Anlaufschräge, welche an einem in Transportrichtung gesehen vorderen Ende der Auflageschiene angeordnet ist, erstreckt sich zweckmäßig bis unterhalb der Ebene, in welcher sich die Produktauflage während des Transports stromaufwärts des Greifbereichs und in flachem Zustand befindet. So kann die Produktauflage von dem Zuförderer beim Transport in den Greifbereich auf die Anlaufschräge und weiter auf die Auflageschiene aufgeschoben werden. Die Anlaufschräge kann dazu seitlich des Zuförderers angeordnet sein und die Produktauflage kann breiter als der Zuförderer sein und seitlich über diesen überstehen. Die Anlaufschräge kann sich zudem von einem schmalen unteren Ende auf ein breiteres oberes Ende, welches zweckmäßig die Breite der Auflageschiene aufweist, verbreitern.

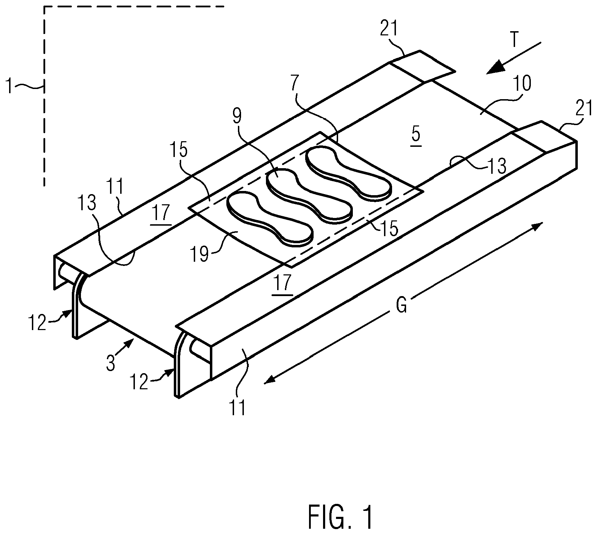

In einer bevorzugten Variante weist die Verpackungsanlage einen zweiten Zuförderer auf, der dazu konfiguriert ist, die Produktauflage auf die Anlaufschräge und/oder die Auflageschiene aufzuschieben. Dazu kann der zweite Zuförderer dieselbe oder eine andere Breite als der erste Zuförderer aufweisen. Die Transportfläche des zweiten Zuförderers kann außerdem in derselben Ebene wie die Transportfläche oder alternativ höher oder tiefer als die Transportfläche des ersten Zuförderers angeordnet sein. Der zweite Zuförderer ist stromaufwärts des ersten Zuförderers angeordnet. Durch Verwendung eines zweiten Zuförderers ist besonders gut sichergestellt, dass sich die Produktverpackung nicht unterhalb der Auflageschiene einfädelt sondern auch bei schnellem Vorschub zuverlässig auf die Auflageschiene aufgeschoben wird. Die Anlaufschräge kann dann, wie unten in Figur 1 gezeigt, an dem stromaufwärtsgelegenen Ende des ersten Zuförderers gerade nach unten weisen.

Typischerweise ist an zwei seitlichen Rändern des Zuförderers jeweils ein Auflagestreifen angeordnet. So kann die Anordnung des Untergreifers sowohl an der rechten sowie an der linken Seite des Zuförderers erfolgen. Ebenso kann ein Untergreifer verwendet werden, welcher mittels zweier Greifarme die Produktauflage ähnlich einer Zangenbewegung von beiden Seiten untergreift. Außerdem verhindert die symmetrische, beidseitige Auflage der Produktauflage auf den Auflagestreifen, dass sich die Produktauflage während der Transportbewegung verschiebt.

In einer weiteren vorteilhaften Variante weist der Untergreifer eine abgeschrägte Vorderkante auf. So kann trotz einer ansonsten stabilen Ausbildung des Untergreifers sowie dessen Greifarm in Form von Streben, Fingern oder Flächen, welche dazu geeignet sind, die Produktauflage anzuheben, der Greifarm gut unter die Produktauflage geschoben werden. Die Anhebung des Randbereichs der Produktauflage kann so auf ein nötiges Minimum reduziert werden.

In einer typischen Variante ist der Untergreifer dazu konfiguriert, zumindest phasenweise während des Betriebs zum Untergreifen der Produktauflage in bündigem Kontakt mit der Oberseite des Auflagestreifens zu sein. Dazu kann der Untergreifer beispielsweise mit mäßigem Druck auf die Oberseite des Auflagestreifens aufgedrückt werden. Dies stellt sicher, dass der Untergreifer unterhalb des nach oben stehenden Randbereichs nach innen fährt. Dabei kann die Maschinenprogrammierung zum vertikalen Fahrweg des Untergreifers gewisse Toleranzen aufweisen, da der Anpressdruck ebenfalls innerhalb eines Bereichs variieren kann.

Ein erfindungsgemäßes Verfahren zum Betrieb einer Verpackungsanlage, umfasst folgende Verfahrensschritte:
- Bewegen einer Produktauflage in einer Transportrichtung mittels eines Zuförderers,
- Auflegen und/oder Aufschieben der Produktauflage auf einen Auflagestreifen vor und/oder während der Bewegung der Produktauflage in Transportrichtung, so dass ein Randbereich der Produktauflage auf einer inneren Kante des Auflagestreifens aufliegt und nach oben über eine im Vergleich zu einer Transportfläche des Zuförderers erhöhte Oberseite des Auflagestreifens absteht,
- seitliches Untergreifen der Produktauflage mittels eines Untergreifers, und
- Abfördern der Produktauflage mittels des Untergreifers.

Vorzugsweise umfasst das Aufschieben der Produktauflage auf den Auflagestreifen ein Aufschieben auf eine separat vom Zuförderer angeordnete Auflageschiene sowie eine daran angeordnete Anlaufschräge.

In einer vorteilhaften Variante wird die Produktauflage mittels eines zweiten Zuförderers bewegt und zumindest teilweise durch diesen auf die Auflageschiene und/oder die Anlaufschräge aufgeschoben.

Im Folgenden werden Ausführungsbeispiele der Erfindung anhand der Figuren näher beschrieben. Dabei zeigen
Figur 1: eine perspektivische Ansicht eines Zuförderers als Teil einer Verpackungsanlage mit beidseitig an dem Zuförderer angeordneten Auflageschienen,
Figur 2: eine Schnittansicht eines Zuförderers mit Auflageschiene und Untergreifer,
Figur 3: eine vergrößerte Darstellung des Kreisausschnitts in Figur 2,
Figur 4: eine perspektivische Ansicht eines ersten und zweiten Zuförderers,
Figur 5a: eine Schnittansicht eines Gurtbands eines Zuförderers mit separat von diesem angeordneten Auflageschienen,
Figur 5b: eine Schnittansicht eines Gurtbands eines Zuförderers mit an dem Gurtband angeordneten Auflagestreifen.

Einander entsprechende Komponenten sind in den Figuren jeweils mit gleichen Bezugszeichen versehen.

Figur 1 zeigt eine perspektivische Ansicht eines Ausschnitts einer Verpackungsanlage 1 mit einem Zuförderer 3, auf dessen Transportfläche 5 eine Produktauflage 7 mit Scheiben von Produkten 9 aufliegt. Der Zuförderer 3 ist als Bandförderer mit einem Gurtband 10 ausgebildet. Beidseits des Zuförderers 3 ist jeweils ein Auflagestreifen 11 in Form einer separat vom Zuförderer 3 ausgebildeten Auflageschiene 11 an einem seitlichen Rand 12 des Zuförderers 3 angeordnet, wobei die Auflageschienen 11 den Zuförderer 3 teilweise überlappen. Die Produktauflage 7 liegt auf einer inneren Kante 13 der Auflageschiene 11 auf. Da die innere Kante 13 im Vergleich zur Transportfläche 5 erhöht ist, wird jeweils ein Randbereich 15 (gekennzeichnet durch gestrichelte Linien) der Produktauflage 7 nach oben gebogen und verläuft dadurch mit Abstand oberhalb einer Oberseite 17 der Auflageschiene 11. Das Produkt 9 auf der Produktauflage 7 sorgt für die nötige Gewichtskraft, um die Produktauflage 7 in einem mittleren Bereich 19 auf der Transportfläche 5 zu halten und so die Biegung zu erzeugen. Zusammen mit der Biegesteifigkeit der Produktauflage 7 kann so der Randbereich 15 in einer Größenordnung von ca. 1 bis 10 mm nach oben gebogen werden.

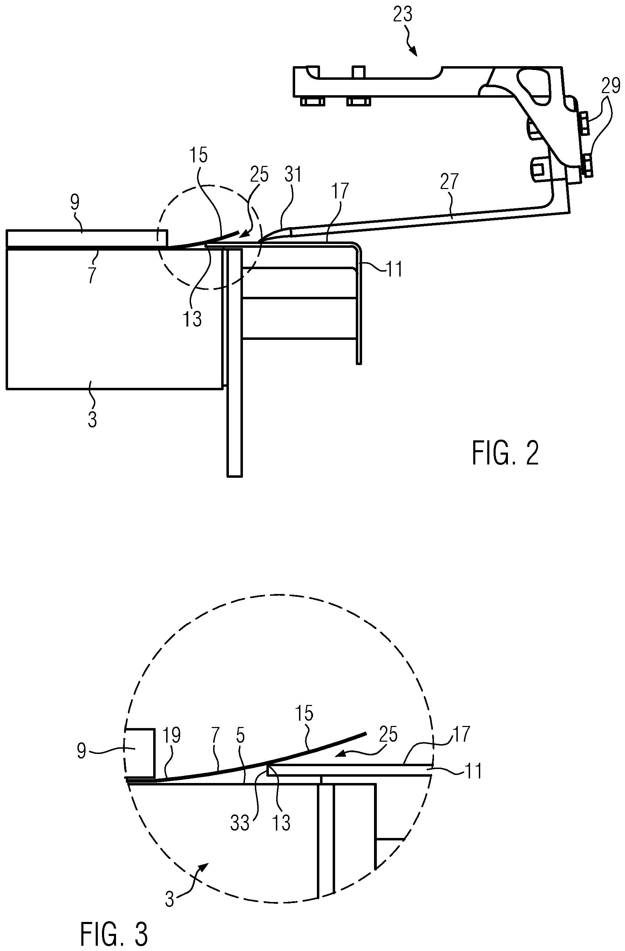

Die Produktauflage kann beispielsweise ein Trennblatt mit einer Dicke von ca. 0,03 bis 0,09 mm aus Papier, Kunststoff oder einem Verbundstoff sein. Um die Produktauflage 7 in einer Transportrichtung T auf die Auflageschiene 11 aufschieben zu können, ist an dieser jeweils eine Anlaufschräge 21 angeordnet. Die Auflageschiene 11 definiert in der gezeigten Anordnung im Wesentlichen den Greifbereich G, in welchem ein Untergreifer (siehe Figur 2) die Produktauflage 7 untergreifen und abtransportieren kann.

Figur 2 zeigt eine Schnittansicht eines seitlichen Abschnitts des Zuförderers 3 senkrecht zur Transportrichtung T mit der Auflageschiene 11 und dem Untergreifer 23. Der Randbereich 15 der Produktauflage 7 steht aufgrund der Höhe der inneren Kante 13 nach oben über die Oberseite 17 der Auflageschiene 11 ab, so dass der Untergreifer 23 in den entstehenden Spalt 25 zwischen Produktauflage 7 und Oberseite 17 der Auflageschiene 11 einfahren kann. Der Untergreifer 23 weist einen Greifarm 27 auf, welcher in unterschiedlichen Größen und Ausführungen vorhanden sein kann und dazu austauschbar, beispielsweise mittels Schraubverbindungen 29, montiert sein kann. Der Untergreifer 23 bzw. der Greifarm 27 kann eine abgeschrägte Vorderkante 31 aufweisen, welche das Einfahren in den Spalt 25 zusätzlich verbessert. Um das sichere Einfahren in den Spalt 25 zu gewährleisten, kann der Greifarm 27 des Untergreifers 23 mit mäßigem Druck auf die Oberseite 17 der Auflageschiene 11 angedrückt werden. Dazu kann der Greifarm 27 oder der Untergreifer 23 auch federnd in dem ihn bewegenden Fahrmechanismus gelagert sein.

Figur 3 zeigt eine vergrößerte Darstellung des mit einem gestrichelten Kreis markierten Bereichs in Figur 2. Zu erkennen ist, dass einerseits durch die Gewichtskraft des Produkts 9 der mittlere Bereich 19 der Produktauflage 7 auf der Transportfläche 5 des Zuförderers 3 gehalten wird, und andererseits der Randbereich 15 der Produktauflage 7 auf der inneren Kante 13 der Auflageschiene 11 aufliegt und so nach oben gebogen wird. Die Auflageschiene 11 weist zudem eine Innenseite 33 auf, kann jedoch, je nach Stabilität des verwendeten Materials, auch als flaches Blech ausgefertigt sein. Die horizontale und vertikale Position der Auflageschiene 11 kann einstellbar sein, so dass die Verpackungsanlage 1 für Produktauflagen 7 unterschiedlicher Größen verwendbar ist und auch die Ausdehnung des Spalts 25 verändert werden kann. Ebenso kann die Auflageschiene 11 austauschbar an dem Zuförderer 3 angeordnet sein.

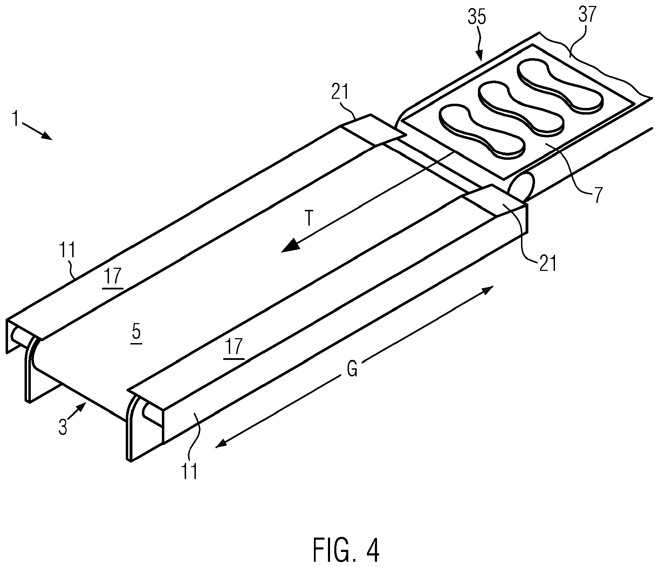

Figur 4 zeigt eine perspektivische Ansicht einer Verpackungsanlage 1 mit einem ersten und einem zweiten Zuförderer 3, 35. In der gezeigten Ausführungsform weist der zweite Zuförderer 35 eine Breite auf, so dass die Produktauflage 7 vollständig auf einer Transportfläche 37 des zweiten Zuförderers 35 aufliegt. Die Transportfläche 5 des ersten Zuförderers 3 und die Transportfläche 37 des zweiten Zuförderers 35 befinden sich im Wesentlichen auf derselben Höhe und die Anlaufschrägen 21 erstrecken sich bis unterhalb dieser Höhe, so dass der zweite Zuförderer 35 die Produktauflage 7 auf die Anlaufschrägen 21 und weiter auf die Oberseiten 17 der Auflageschienen 11 schieben kann. Der weitere Transport im Greifbereich G erfolgt durch den ersten Zuförderer 3. Neben der gezeigten Ausführungsform sind auch zahlreiche andere Varianten möglich. So kann der zweite Zuförderer 35 auch erhöht positioniert sein und die Produktauflage 7 direkt auf der Oberseite 17 der Auflageschiene 11 ablegen, womit auf die Anlaufschrägen 21 verzichtet werden kann. Auch kann beispielsweise der zweite Zuförderer 35 schmaler sein und sich in den Bereich zwischen den Anlaufschrägen 11 erstrecken.

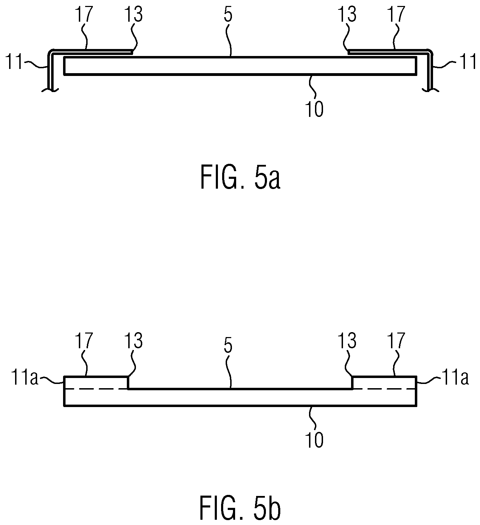

Figur 5a zeigt eine Schnittansicht eines Gurtbands 10 eines Zuförderers 3 mit separat von diesem angeordneten Auflageschienen 11 entsprechend der Ausführungsformen der vorangegangenen Zeichnungen.

Figur 5b zeigt eine Schnittansicht eines Gurtbands 10 eines Zuförderers 3 mit an dem Gurtband 10 angeordneten Auflagestreifen 11a entsprechend einer weiteren Ausführungsform. Die Auflagestreifen 11a können einstückig mit dem Gurtband 10 gefertigt sein oder fest mit diesem verbunden sein. Das Aufliegen der Randbereiche 15 der Produktauflage 7 (nicht gezeigt) auf den inneren Kanten 13 sorgt, wie in den obigen Beispielen, für ein nach oben Stehen der Randbereiche 15 über die Oberseiten 17 der Auflagestreifen.Im Folgenden wird die Funktionsweise der Verpackungsanlage 1 anhand der Figuren näher beschrieben.

Stromaufwärts eines Greifbereichs G wird eine Produktauflage 7 auf einem ersten oder zweiten Zuförderer 3, 35 platziert und mit einem Produkt 9, beispielsweise eine oder mehrere Scheiben eines Nahrungsmittels, beladen. Die Produktauflage 7 wird dann mittels des Zuförderers 3, 35 in Transportrichtung T zu einem Greifbereich G bewegt. Der Zuförderer 3, 35 schiebt dann die Produktauflage 7 auf den im Greifbereich G angeordneten Auflagestreifen 11 in Form einer Auflageschiene 11 auf, wobei dies mit Hilfe von Anlaufschrägen 21 geschehen kann. Alternativ kann bereits der Zuförderer 3, bzw. dessen Gurtband 10 seitliche Auflagestreifen 11a umfassen (siehe Figur 5b), auf welche die Produktauflage 7 aufgelegt oder aufgeschoben wird. Durch das Aufliegen des Randbereichs 15 der Produktauflage 7 auf dem Auflagestreifen 11, 11a wird der Randbereich 15 nach oben gebogen. Üblicherweise wenn der Randbereich 15 der Produktauflage 7 in gesamter Länge auf dem Auflagestreifen 11, 11a aufliegt, fährt der Untergreifer 23 von der Seite in den Spalt 25 zwischen Produktauflage 7 und Oberseite 17 des Auflagestreifens 11, 11a ein und weiter unterhalb die Produktauflage 7, und zwar bis diese sich ausreichend weit auf dem Greifarm 27 des Untergreifers 23 befindet, um von diesem angehoben zu werden. Dann kann die Produktauflage 7 mittels des Untergreifers 23 abtransportiert werden. Das beschriebene Aufschieben der Produktauflage 7 auf den Auflagestreifen 11, 11a kann entweder mit einer Übergabe der Produktauflage 7 von einem zweiten Zuförderer 35 zu einem ersten Zuförderer 3 einhergehen, oder die Bewegung der Produktauflage 7 kann vollständig durch einen Zuförderer 3 geschehen.

Ausgehend von den oben dargestellten Ausführungsformen einer Verpackungsanlage 1 sind vielerlei Variationen derselben möglich. So können die Bewegungen der Zuförderer 3, 35 kontinuierlich oder getaktet erfolgen. Es können, wie beschrieben, zwei Zuförderer 3, 35 verwendet werden, es kann jedoch auch nur ein Zuförderer 3 verwendet werden und die Anlaufschrägen 21 können sich teilweise an diesem seitlich erstrecken, so dass überstehende Randbereiche 15 auf die Anlaufschrägen 21 aufgeschoben werden. Dabei können die Anlaufschrägen 21 sich nach unten verjüngend ausgebildet sein. Die innere Kante 13 der Auflageschiene 11 kann rechtwinklig oder abgerundet sein. Die Transportfläche 5 des Zuförderers 3 kann senkrecht zur Transportrichtung T orientierte längliche Erhebungen aufweisen, wodurch eine Vorderkante der Produktauflage 7 nach oben stehen kann und so die Produktauflage 7 auf die Auflageschiene 11 mittels eines einzigen Zuförderers 3 aufgeschoben werden kann, ohne dass dafür Anlaufschrägen notwendig wären.

## Patentansprüche

1. Verpackungsanlage (1) mit einem Zuförderer (3), einem Greifbereich (G) und einem Untergreifer (23), wobei der Zuförderer (3) eine Transportfläche (5) aufweist und dazu geeignet ist, eine Produktauflage (7) auf der Transportfläche (5) in den Greifbereich (G) zu transportieren, und der Untergreifer (23) dazu konfiguriert ist, die Produktauflage (7) in dem Greifbereich (G) zu untergreifen, **dadurch gekennzeichnet, dass** die Verpackungsanlage (1) in dem Greifbereich (G) einen vom Untergreifer (23) separaten Auflagestreifen (11, 11a) für die Produktauflage (7) mit einer inneren Kante (13) und einer Oberseite (17) aufweist, wobei die Oberseite (17) im Vergleich zu der Transportfläche (5) des Zuförderers (3) erhöht ist.

2. Verpackungsanlage nach Anspruch 1, **dadurch gekennzeichnet, dass** der Zuförderer (3) ein Bandförderer ist, insbesondere ein Gurtband (10) umfasst.

3. Verpackungsanlage nach Anspruch 2, **dadurch gekennzeichnet, dass** der Auflagestreifen (11a) auf dem Gurtband (10) des Zuförderers (3) angeordnet ist und vorzugsweise fest oder einstückig mit dem Zuförderer (3) verbunden ist.

4. Verpackungsanlage nach einem der vorangegangenen Ansprüche, **dadurch gekennzeichnet, dass** der Auflagestreifen (11) als vom Zuförderer (3) separate Auflageschiene (11) den Zuförderer (3) teilweise überlappend angeordnet ist.

5. Verpackungsanlage nach einem der vorangegangenen Ansprüche, **dadurch gekennzeichnet, dass** der Auflagestreifen (11, 11a) an einem seitlichen Rand (12) des Zuförderers (3) angeordnet ist.

6. Verpackungsanlage nach einem der vorangegangenen Ansprüche, **dadurch gekennzeichnet, dass** der Auflagestreifen (11, 11a) im Wesentlichen parallel zu einer Transportrichtung (T) angeordnet ist.

7. Verpackungsanlage nach einem der vorangegangenen Ansprüche, **dadurch gekennzeichnet, dass** der Auflagestreifen (11, 11a) austauschbar an dem Zuförderer (3) angeordnet ist.

8. Verpackungsanlage nach einem der Ansprüche 4 bis 7, **dadurch gekennzeichnet, dass** die Auflageschiene (11) verschiebbar an dem Zuförderer (3) angeordnet ist.

9. Verpackungsanlage nach einem der Ansprüche 4 bis 8, **dadurch gekennzeichnet, dass** die Auflageschiene (11) eine Anlaufschräge (21) aufweist.

10. Verpackungsanlage nach einem der Ansprüche 4 bis 9, **gekennzeichnet durch** einen zweiten Zuförderer (35), der dazu konfiguriert ist, die Produktauflage (7) auf die Anlaufschräge (21) und/oder die Auflageschiene (11) aufzuschieben.

11. Verpackungsanlage nach einem der vorangegangenen Ansprüche, **dadurch gekennzeichnet, dass** an zwei seitlichen Rändern (12) des Zuförderers (3) jeweils ein Auflagestreifen (11, 11a) angeordnet ist.

12. Verpackungsanlage nach einem der vorangegangenen Ansprüche, **dadurch gekennzeichnet, dass** der Untergreifer (23) dazu konfiguriert ist, zumindest phasenweise während des Betriebs zum Untergreifen der Produktauflage (7) in bündigem Kontakt mit der Oberseite (17) des Auflagestreifens (11, 11a) zu sein.

13. Verfahren zum Betrieb einer Verpackungsanlage (1), umfassend folgende Verfahrensschritte:
Bewegen einer Produktauflage (7) in einer Transportrichtung (T) mittels eines Zuförderers (3),
Auflegen und/oder Aufschieben der Produktauflage (7) auf einen Auflagestreifen (11, 11a) vor und/oder während der Bewegung der Produktauflage (7) in Transportrichtung (T), so dass ein Randbereich (15) der Produktauflage (7) auf einer inneren Kante (13) des Auflagestreifens (11, 11a) aufliegt und nach oben über eine im Vergleich zu einer Transportfläche (5) des Zuförderers (3) erhöhte Oberseite (17) des Auflagestreifens (11, 11a) absteht,
seitliches Untergreifen der Produktauflage (7) mittels eines Untergreifers (23) indem dieser zwischen der Produktauflage (7) und der Oberseite (17) des Auflagestreifens (11, 11a) nach innen fährt, und
Abfördern der Produktauflage (7) mittels des Untergreifers (23).

14. Verfahren nach Anspruch 13, **dadurch gekennzeichnet, dass** das Aufschieben der Produktauflage (7) auf den Auflagestreifen (11, 11a) ein Aufschieben auf eine separat vom Zuförderer (3) angeordnete Auflageschiene (11) sowie eine daran angeordnete Anlaufschräge (21) umfasst.

15. Verfahren nach Anspruch 13 oder 14, **dadurch gekennzeichnet, dass** die Produktauflage (7) mittels eines zweiten Zuförderers (35) bewegt und zumindest teilweise durch diesen auf die Auflageschiene (11) und/oder die Anlaufschräge (21) aufgeschoben wird.

## Claims

1. A packaging assembly (1) comprising a feed conveyor (3), a gripping area (G) and an undergripper (23), wherein the feed conveyor (3) has a conveying surface (5) and is suitable for conveying on the conveying surface (5) a product support (7) into the gripping area (G), and the undergripper (23) is configured to grip the product support (7) in the gripping area (G) from below, **characterized in that** the packaging assembly (1) has, in the gripping area (G), a support strip (11, 11a) for the product support (7), being separate from the undergripper (23), with an inner edge (13) and an upper surface (17), the upper surface (17) being raised in comparison with the conveying surface (5) of the feed conveyor (3).

2. The packaging assembly according to claim 1, **characterized in that** the feed conveyor (3) is a belt conveyor comprising in particular a belt (10).

3. The packaging assembly according to claim 2, **characterized in that** the support strip (11a) is arranged on the belt (10) of the feed conveyor (3) and is preferably fixedly or integrally connected to the feed conveyor (3).

4. The packaging assembly according to one of the preceding claims, **characterized in that** the support strip (11) is arranged as a support rail (11), which is separate from the feed conveyor (3) and which partially overlaps the feed conveyor (3).

5. The packaging assembly according to one of the preceding claims, **characterized in that** the support strip (11, 11a) is arranged on a lateral edge (12) of the feed conveyor (3).

6. The packaging assembly according to one of the preceding claims, **characterized in that** the support strip (11, 11a) is arranged substantially parallel to a conveying direction (T).

7. The packaging assembly according to one of the preceding claims, **characterized in that** the support strip (11, 11a) is arranged on the feed conveyor (3) in an exchangeable manner.

8. The packaging assembly according to one of the claims 4 to 7, **characterized in that** the support rail (11) is arranged on the feed conveyor (3) in a displaceable manner.

9. The packaging assembly according to one of the claims 4 to 8, **characterized in that** the support rail (11) comprises a run-on slope (21).

10. The packaging assembly according to one of the claims 4 to 9, **characterized by** a second feed conveyor (35), which is configured to push the product support (7) onto the run-on slope (21) and/or the support rail (11).

11. The packaging assembly according to one of the preceding claims, **characterized in that** two lateral edges (12) of the feed conveyor (3) each have a support strip (11, 11a) arranged thereon.

12. The packaging assembly according to one of the preceding claims, **characterized in that** the undergripper (23) is configured to be in flush contact with the upper surface (17) of the support strip (11, 11a), at least in certain phases during the operation for gripping the product support (7) from below.

13. A method for operating a packaging assembly (1), comprising the following method steps:
moving a product support (7) in a conveying direction (T) by means of a feed conveyor (3),
placing and/or pushing the product support (7) onto a support strip (11, 11a) prior to and/or during the movement of the product support (7) in the conveying direction (T), so that an edge area (15) of the product support (7) will rest on an inner edge (13) of the support strip (11, 11a) and project upwards beyond an upper surface (17) of the support strip (11, 11a), the upper surface (17) being raised in comparison with a conveying surface (5) of the feed conveyor (3),
gripping, from the side, the product support (7) from below by means of an undergripper (23) by moving inwards between the product support (7) and the upper surface (17) of the support strip (11, 11a), and
taking the product support (7) away by means of the undergripper (23).

14. The method according to claim 13, **characterized in that** pushing the product support (7) onto the support strip (11, 11a) comprises pushing onto a support rail (11) arranged separately from the feed conveyor (3) as well as onto a run-on slope (21) arranged thereon.

15. The method according to claim 13 or 14, **characterized in that** the product support (7) is moved by means of a second feed conveyor (35) and is pushed, at least partially, by the latter onto the support rail (11) and/or the run-on slope (21).

## Revendications

1. Installation d'emballage (1) avec un convoyeur d'alimentation (3), une région de préhension (G) et un dispositif de préhension par en dessous (23), dans laquelle le convoyeur d'alimentation (3) présente une surface de transport (5) et est approprié pour transporter un support de produit (7) sur la surface de transport (5) dans la région de préhension (G), et le dispositif de préhension par en dessous (23) est configuré pour saisir par en dessous le support de produit (7) dans la région de préhension (G), **caractérisée en ce que** l'installation d'emballage (1) présente dans la région de préhension (G) une bande d'appui (11, 11a), séparée du dispositif de préhension par en dessous (23) et destinée au support de produit (7), avec un bord intérieur (13) et un côté supérieur (17), dans laquelle le côté supérieur (17) est surélevé par rapport à la surface de transport (5) du convoyeur d'alimentation (3).

2. Installation d'emballage selon la revendication 1, **caractérisée en ce que** le convoyeur d'alimentation (3) est un convoyeur à bande, en particulier un tapis transporteur (10).

3. Installation d'emballage selon la revendication 2, **caractérisée en ce que** la bande d'appui (11a) est agencée sur le tapis transporteur (10) du convoyeur d'alimentation (3) et est de manière préférée reliée de manière fixe ou solidaire au convoyeur d'alimentation (3).

4. Installation d'emballage selon l'une quelconque des revendications précédentes, **caractérisée en ce que** la bande d'appui (11) est agencée sous la forme d'un rail d'appui (11) séparé du convoyeur d'alimentation (3) et de manière à chevaucher partiellement le convoyeur d'alimentation (3).

5. Installation d'emballage selon l'une quelconque des revendications précédentes, **caractérisée en ce que** la bande d'appui (11, 11a) est agencée au niveau d'un bord latéral (12) du convoyeur d'alimentation (3).

6. Installation d'emballage selon l'une quelconque des revendications précédentes, **caractérisée en ce que** la bande d'appui (11, 11a) est agencée de manière essentiellement parallèle à une direction de transport (T).

7. Installation d'emballage selon l'une quelconque des revendications précédentes, **caractérisée en ce que** la bande d'appui (11, 11a) est agencée au niveau du convoyeur d'alimentation (3) de manière à pouvoir être échangée.

8. Installation d'emballage selon l'une des revendications 4 à 7, **caractérisée en ce que** le rail d'appui (11) est agencé au niveau du convoyeur d'alimentation (3) de manière à pouvoir être déplacé.

9. Installation d'emballage selon l'une quelconque des revendications 4 à 8, **caractérisée en ce que** le rail d'appui (11) présente une pente de départ (21).

10. Installation d'emballage selon l'une quelconque des revendications 4 à 9, **caractérisée par** un second convoyeur d'alimentation (35) qui est configuré pour pousser le support de produit (7) sur la pente de départ (21) et/ou sur le rail d'appui (11).

11. Installation d'emballage selon l'une quelconque des revendications précédentes, **caractérisée en ce que** respectivement une bande d'appui (11, 11a) est agencée au niveau des deux bords latéraux (12) du convoyeur d'alimentation (3).

12. Installation d'emballage selon l'une quelconque des revendications précédentes, **caractérisée en ce que** le dispositif de préhension par en dessous (23) est configuré pour être en contact rasant avec le côté supérieur (17) de la bande d'appui (11, 11a) au moins par phases pendant le fonctionnement afin de saisir par en dessous le support de produit (7).

13. Procédé de fonctionnement d'une installation d'emballage (1), comprenant les étapes de procédé ci-dessous consistant à :
déplacer un support de produit (7) dans une direction de transport (T) au moyen d'un convoyeur d'alimentation (3),
placer et/ou pousser le support de produit (7) sur une bande d'appui (11, 11a) avant et/ou pendant le mouvement du support de produit (7) dans la direction de transport (T), de sorte qu'une région de bord (15) du support de produit (7) repose sur un bord intérieur (13) de la bande d'appui (11, 11a) et dépasse vers le haut au-delà d'un côté supérieur (17) de la bande d'appui (11, 11a) qui est surélevé par rapport à une surface de transport (5) du convoyeur d'alimentation (3),
saisir par en dessous et de manière latérale le support de produit (7) au moyen d'un dispositif de préhension par en dessous (23) en déplaçant ledit dispositif de préhension vers l'intérieur entre le support de produit (7) et le côté supérieur (17) de la bande d'appui (11, 11a), et
retirer le support de produit (7) au moyen du dispositif de préhension par en dessous (23).

14. Procédé selon la revendication 13, **caractérisé en ce que** l'étape de poussée du support de produit (7) sur la bande d'appui (11, 11a) comprend une étape consistant à pousser sur un rail d'appui (11), agencé séparément par rapport au convoyeur d'alimentation (3), ainsi que sur une pente de départ (21) agencée au niveau dudit rail d'appui.

15. Procédé selon la revendication 13 ou 14, **caractérisé en ce que** le support de produit (7) est déplacé au moyen d'un second convoyeur d'alimentation (35) et est poussé sur le rail d'appui (11) et/ou sur la pente de départ (21) au moins partiellement grâce audit convoyeur d'alimentation.
